# EUROPEAN PATENT SPECIFICATION

(11) **EP 3 452 378 B1**
(45) Date of publication and mention of the grant of the patent: **03.05.2023**
(21) Application number: 17722012.6
(22) Date of filing: 04.05.2017
(51) Int. Cl.: B65B 61/02, B41M 1/14, B65D 65/00

(54) **METHOD FOR MANUFACTURING A PACKAGE FOR DAIRY PRODUCTS AND PACKAGE FOR DAIRY PRODUCTS THUS MANUFACTURED**
VERFAHREN ZUR HERSTELLUNG EINER VERPACKUNG FÜR MILCHPRODUKTE UND VERPACKUNG FÜR SO HERGESTELLTE MILCHPRODUKTE
PROCÉDÉ DE FABRICATION D'UN EMBALLAGE POUR PRODUITS LAITIERS ET EMBALLAGE POUR PRODUITS LAITIERS AINSI FABRIQUÉ

(30) Priority: 05.05.2016 IT UA20163195
(43) Date of publication of application: 13.03.2019
(73) Proprietor: Egidio Galbani S.r.l., 20149 Milano (IT)
(72) Inventor: SILVA, Carla, 20149 Milano (IT)
(74) Representative: Petraz, Gilberto Luigi
(86) International application number: PCT/EP2017/060729
(87) International publication number: WO 2017/191296

(56) References cited:
- JP-A- 2001 002 086
- US-A- 6 013 363

## Description

### FIELD OF APPLICATION

The present invention relates to a method for manufacturing a package for dairy products, in particular for dairy products that, inside the package, are immersed in a preserving liquid, for example mozzarella or the like. The present invention relates also to a package for dairy products manufactured with this method.

### STATE OF THE ART

It is known that common packages for dairy products with preserving liquid are made up of a multi-layer film comprising two or more film layers, usually plastic layers, joined by means of suitable adhesion processes. One of the two layers is usually made of polyethylene and is sealable, a feature that is indispensable for the production of the finished package that is obtained by sealing the edges of the package itself. Sealing can occur, for instance, by means of heat sealing or by another common technique. A known packaging material is described for example in the document US-A-6013363.

Graphic elements such as logos, drawings, signs, colorings or the like are further impressed through printing on common packages of dairy products with preserving liquid, so that the package is immediately recognizable and so that information relating to the characteristics of the dairy product contained is reproduced on the package. According to the regulations in force, ink or inks used for printing must not come in contact with the product contained in the package or with its preserving liquid, so that the process of printing the graphic elements is completed by means of a so-called "reverse" rotogravure or flexographic printing technique. According to this printing technique, basically, one of the two or more films used to manufacture the multi-layer film is printed only on the inner side, in such a manner that, once they are coupled, they reciprocally trap the ink or inks for obtaining the graphic elements.

A drawback of common packages of dairy products with preserving liquid is that the presence of ink can seriously limit the strength of the sealing along the edges of the package, and for this reason these edges are left without any color.

Document JP2001 002086A describes a package having a multilayer film, with a dark ink and a light ink pattern printed on the inner surface of an outer protective layer of the film. The film is welded to provide a bag, the edges of the film are printed 100% within the sealed edges.

It is evident that the strength of the sealings of these packages is of vital importance for the correct preservation of the product and, of course, to avoid undesired leakages of preserving liquid.

This drawback is even more accentuated if the production speed of dairy product packages is higher, because the higher the production speed of dairy product packages, the lesser the time available for the sealing means, and the higher the temperatures and the pressures, with a consequent stress of the multi-layer film, to carry out a correct sealing of the edges.

In some manufacturing processes of dairy product packages these speeds can, in fact, reach 100 packages a minute and more.

Other limitations and drawbacks of conventional solutions and technologies will become evident to a person of skill in the art after reading the remaining part of the present specification with reference to the drawings and to the description of the forms of embodiment that follow, even though it is understood that the description of the state of the art related to the present specification shall not be considered an admission that what is described here is already known from the prior state of the art.

Therefore, there exists the need to develop a method for producing dairy products and for manufacturing a package for dairy products that can overcome at least one of the drawbacks of the known techniques.

An object of the present invention is, therefore, to develop a method for manufacturing a package for dairy products that allows to carry out printing of pigmented parts or graphic elements of any kind on the transverse and/or longitudinal edges of the package, which will be subject to sealing, while keeping an optimum strength of the package.

A further object of the present invention is to develop a method for manufacturing a package for dairy products that allows to obtain a package with printed edges that are suitable to be sealed, in which package the strength of the sealing is guaranteed also for high production speeds of packages for dairy products with preserving liquid.

A still further object of the present invention is to manufacture a package for dairy products, in particular for dairy products with preserving liquid, in which the sealed edges have an optimum strength, also in the presence of pigmented parts or graphic elements of any kind printed on the sealed edges.

A further object is, therefore, to manufacture a package for dairy products, in particular for dairy products with preserving liquid, that is immediately recognizable and that has also qualities of aesthetic value thanks to the presence of pigmented parts or graphic elements on the sealing edges.

To overcome the shortcomings of the prior art and to achieve these as well as other objects and advantages, the Applicant studied, experimented and realized the present invention.

### EXPOSITION OF THE INVENTION

The present invention is set out and characterized in the independent claims. The dependent claims expound other features of the present invention or variants to the main idea of solution.

In accordance with the above-mentioned objects and according to a first aspect of the invention, a method is provided according to claim 1.

Here and in the continuation of the description and in the claims, with the term "coverage" or "covering index" basically the surface or area is understood that is printed by any printing means whatsoever, for instance by a printing cylinder, i.e. the quantity of ink that it lays on the support.

Coverage can, hence, also be defined as the printing area or surface covered by ink.

In case of more than one printing means, for example in case of several printing cylinders, said coverage will be the surface or printing area of each printing cylinder.

Therefore, coverage shall not be confused with the parameter relating to opacity, which cannot be higher than 100%.

Coverage is usually expressed in percentage and total coverage is the summation of the coverages of the single colors, if there is more than one. In case of a summation of coverages, hence, the result can be higher than 100%.

By way of a non-limiting example, coverage referred to the surface unit can vary, for a single color/printing element, from 20% to 100%; this is the reason why coverage of inks can be higher than 100%, if there is an overlap in the laying of said inks.

Preferably, in forms of embodiment said value of total coverage or total covering index is equal to or lower than about 50%.

According to a further aspect of the invention, the ratio between printed areas and colorless areas or areas without ink in said longitudinal edges and/or in said transverse edges subject to sealing is comprised between 30% and 60 %.

The distribution of printed areas and colorless areas or areas without ink obtained in a specific printing area of said transverse edges and/or of said longitudinal edges is, preferably, such as to comply with said coverage or covering index comprised between 10% and 150% and/or said ratio between printed areas and colorless areas or areas without ink comprised between 30% and 60%.

According to a further aspect of the invention, through said step of printing at least one of the longitudinal edges and/or of the transverse edges an alternation between printed areas and colorless areas or areas without ink is obtained which is suitable to allow for a correct production of packages on the production lines.

The printing of the multi-layer film with such values of total coverage is carried out by rotogravure or flexographic technique.

According to a further aspect of the invention, printing of the film is followed by a step of folding the film in a manner such as to give it a substantially tubular shape, by the sealing of the longitudinal edges and hence by the sealing of the transverse edges.

A further subject-matter of the invention is a package for dairy products, in particular for dairy products with preserving liquid, achieved by a manufacturing method as described above.

These and other aspects, features and advantages of the present disclosure will be better appreciated with reference to the following description, to the accompanying drawings and to the appended claims. The accompanying drawings, which are integrated into and which form part of the present description, illustrate some forms of embodiment of the present subject-matter and, together with the description, intend to describe the principles of the disclosure.

The various aspects and features described in the present specification can be applied individually, where possible. These individual aspects, for instance aspects and features contained in the description or in the appended dependent claims, can be the object of divisional applications.

It shall be noted that any aspect or feature that is found out to be already known during the patenting procedure is meant to be not claimed and is subject to a disclaimer.

### ILLUSTRATION OF THE DRAWINGS

These and other features of the present invention will be clear from the following description of forms of embodiment, provided by way of a non-limiting example, with reference to the annexed drawings, in which:
- figure 1 is a view from above of a multi-layer film suitable to manufacture a package for dairy products according to the present invention;
- figure 2 is a front view of the package for dairy products according to the invention;
- figure 3 is a rear view of the package for dairy products according to the invention;
- figure 4 is an enlarged view of a printed area made on one longitudinal sealing edge of the present package;
- figure 5 is a view of a variant of a sealing edge for the present package for dairy products;
- figure 6 is a schematic, cross-sectional, view of the present multi-layer film.

To facilitate understanding, identical reference numbers were used, where possible, to identify identical common elements in the figures. It shall be understood that elements and features of a form of embodiment can be suitably incorporated in other forms of embodiment without any further specifications.

### DESCRIPTION OF FORMS OF EMBODIMENT

Reference will be now made in detail to the various forms of embodiment of the invention, of which one or more examples are illustrated in the appended drawings. Each example is provided as an illustration of the invention and is not meant as a limitation of the same. For example, the features illustrated or described as being part of a form of embodiment can be adopted on, or in conjunction with, other forms of embodiment to produce a further form of embodiment. It is understood that the present invention comprises said modifications and variants.

Before describing the forms of embodiment, it is further clarified that the present description is not limited, in its application, to the details of construction and arrangement of the components as described in the following description using the appended figures. The present description can provide other forms of embodiment and be realized or put into practice in other different manners. Furthermore, it is made clear that the phraseology and terminology used here have descriptive purposes and shall not be considered limiting.

With reference to the appended drawings, with 10 a multi-layer film is designated which is suitable to obtain a package 20 for dairy products immersed in their own preserving liquid.

Said film 10 is formed, as stated above, by means of printing the inner or outer side used for the formation of the multi-layer film, so that the ink remains trapped inside the film 10 and so as to prevent said ink from coming in contact with the product to be packaged.

Said film 10 comprises a central area 11 in which graphic elements and pigmented parts of any color whatsoever and with any degree of coverage or covering index can be inserted.

Said film 10 comprises also, on two opposite sides, two transverse edges 12, i.e. directed substantially in T direction, which comprise printed areas 13, with graphic elements of any type, and colorless areas or areas without ink 14.

The film 10 is completed on each side by two longitudinal edges 15 and 16, i.e. directed substantially in L direction, of which at least one, for instance the longitudinal edge 15, comprises printed areas 17, alternating with colorless areas or areas without ink 18.

Considering, for instance, the printed areas 13 of the transverse edges 12, it can be assumed that they were obtained using one or more colors, having a predetermined coverage or covering index.

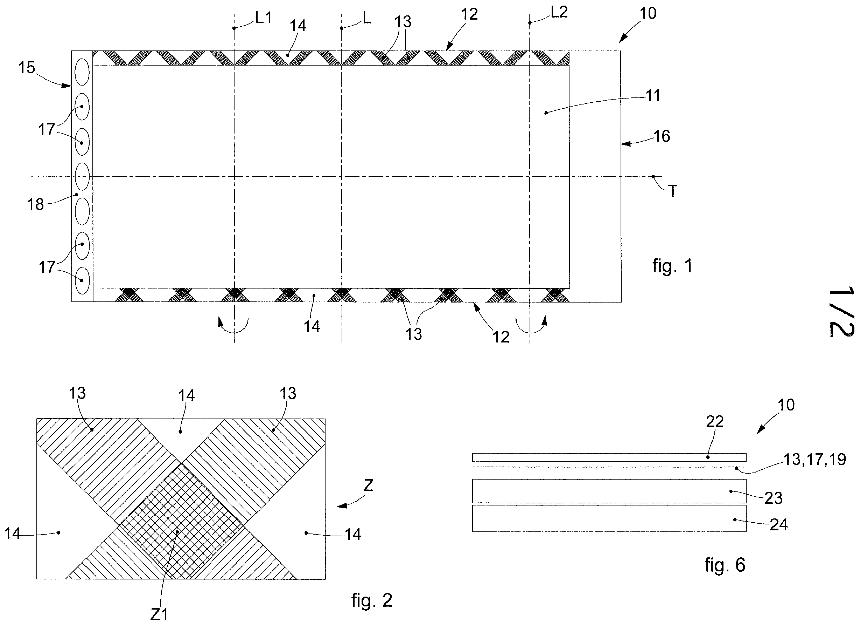

By way of example, observing the printed area Z of figure 2 and assuming that these printed areas 13 provide a first color with high covering power, for example dark blue, and a second color with lower covering power, for example cyan, it is possible to obtain printed areas 13 having a coverage or covering index of the first color corresponding to about 70% and a coverage or covering index of the second color corresponding to 85%, since the second color has a lower covering power, and therefore can be applied in a greater amount on the printed areas 13.

In this exemplary case, the coverage calculated on the whole longitudinal sealing edge would preferably correspond to about 15% for the first color with higher covering power and to about 20% for the second color with lower covering power.

The coverage or covering index, hence, varies depending on the color or colors used, if there are more than one, and must be comprised within suitable ranges, both in relation to a specific printed area Z and in relation to the whole transverse sealing edge 12, so as to guarantee the strength of the sealing to which the transverse edges 12 will be subjected in order to close the package 20.

The same applies also to the longitudinal edge 15, in which printed areas 17 are made that, depending on the colors used and applied, will have coverage values comprised within suitable ranges.

Generalizing what was shown in the example illustrated in figure 1, the Applicant surprisingly found, through suitable experimentations, that by using values of total coverage or total covering index of the ink or inks comprised between 10% and 150%, and preferably equal to or lower than about 50%, in order to make the printed areas 13, a strength of the sealings of said transverse edges 12 and of said longitudinal edges 15 and 16 is guaranteed that is equal to at least 5N/15mm.

Said sealing strength value is determined on a segment of the transverse edge 12 and/or of the longitudinal edge 15, 16 corresponding to about 15 mm.

Said strength value is established according to the standard for determining the seal strength known with the denomination ASTM F88-85 Giflex no. 3 or equivalents.

Said sealing strength value is guaranteed in whatever condition the packages 20 are, for example also when they are subject to pressures due to reciprocal contact when they are contained in containers or the like, and whatever the type of ink or inks used.

The minimum value of the above-mentioned range of total coverage guarantees a sufficient graphic performance, while the maximum value of said total coverage value guarantees the desired sealing strength.

Through said values of total coverage, that is to say a coverage that is valid for the whole sealing edge, whether longitudinal and/or transverse, a strength of the seals of said transverse edges 12 and of said longitudinal edges 15 and 16 is guaranteed that is equal to at least 5N/15mm, in whatever condition the packages 20 are, for example when they are subject to pressures due to reciprocal contact when they are contained in containers or the like, and whatever the type of ink or inks used.

Another parameter that was considered, and that turned out to be important to guarantee an even more efficient and uniform strength of the transverse edges 12, but also of the transverse edges which contain printed areas, for instance the longitudinal edge 15, is the ratio between printed areas 13 and colorless areas or areas without ink 14, which must be comprised between 10% and 60 %.

Furthermore, it was found that the distribution of printed areas 13 and of colorless areas must comply with suitable parameters, see for instance figure 2 in a bigger scale and relating to a print area Z of the transverse edge 12 comprising printed areas 13, in particular the distribution of printed areas 13 in relation to colorless areas or areas without ink 14 will have to comply both with said percentages of coverage comprised between 10% and 150 % and/or with said ratio between printed areas and colored areas between 10% and 60%.

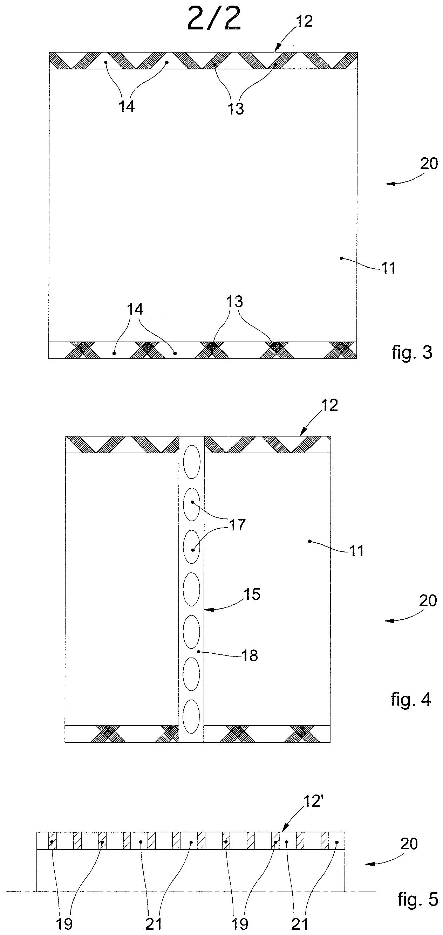

In figure 3 and in figure 4 the package 20, closed and containing the dairy product inside, immersed in its preserving liquid, for example mozzarella, is shown in the front and in the rear.

Figure 5 shows one of the several variants that can be provided to manufacture, for instance, a different transverse edge 12' with different printed areas 19, alternating with colorless areas or areas without ink 21.

Also in this case, the total coverage on the whole edge to be sealed, in this case the transverse edge 12', must have values comprised between 10% and 150 % and preferably equal or lower than 50%. Said values of total coverage will be provided on the longitudinal edges 15 and/or 16 too.

To guarantee an even better uniformity of the strength of the sealing on said transverse edge 12' - as seen before for the transverse edge 12 - the ratio between printed areas 19 and colorless areas or areas without ink 21 must be comprised between 10% and 60%.

Of course, the transverse edges 12 and 12' and the longitudinal edges 15 or 16 can have various forms and distributions of printed areas 13, 17, 19 as long as a minimum strength of said longitudinal and/or transverse edges, which will be subject to a subsequent sealing, of at least 5N/15mm is always guaranteed. Said strength value is referred to a longitudinal and/or transverse edge having a width of about 15mm.

The method for manufacturing the package provides, after the step of printing the central area 11 and the transverse edges 12 or 12' and possibly also the longitudinal edge 15, according to what was explained above, a step of folding the film 10, carried out schematically around the axes L1 and L2 in a manner such as to give it a substantially tubular shape.

Said folding is followed by a longitudinal sealing of the longitudinal edges 15 and 16 and hence, after the dairy product has been inserted inside the package, sealing of the lower transverse edge 12 and then of the upper transverse edge 12 is carried out. In actual fact, in consideration of the speed with which the packages are manufactured, which - as already said - can be of 100 packages a minute and more, sealing of the transverse edges 12 occurs substantially simultaneously.

As we said above, thanks to the step of printing the transverse edges 12 or 12' and the longitudinal edges 15 and/or 16 according to the values of total coverage indicated above, it is possible to obtain packages for dairy products which have an optimum strength in the sealing areas, regardless of the conditions of manufacturing and storage of said packages.

Figure 6 illustrates schematically and in cross section the film 10 according to the invention, comprising in particular three layers 22, 23, 24 and the printed area, for example the printed area 13, 17 or 19.

By way of example, and for a better clarity of illustration, said layers 22, 23 and 24 and the printed area are illustrated as being separate from one another but, of course, in the final film 10, they will be reciprocally adjacent.

Furthermore, the thicknesses illustrated for said layers 22, 23, 24 and for the printed area 13 are purely exemplary and not restrictive.

To make the printed areas 13, 17 and/or 19 of the present film 10, in forms of embodiment of the invention "reverse" rotogravure printing is used.

For example, a suitably pre-engraved printing cylinder can be used to transfer ink, having a suitable viscosity, directly on the inner surface of the printing layer 22, so as to obtain the printed area 13, 17 or 19.

Basically, then, the layer 22 represents the outside part of the film 10 and is printed internally, in a manner such that the layer 22 itself acts as a protection from and towards the printed area 13, 17 or 19.

If more colors are used to make the printed area 13, 17 or 19, more printing cylinders will be used, each of which lays a specific color on the layer 22.

To obtain the desired final printed area, the different colors that are necessary to achieve the final result, for example the printed areas 13, 17 or 19, will be printed in sequence.

For instance, in case of use of a flexographic machine for laying the color or colors, so as to obtain the printed area 13, 17 or 19, said machine will usually be provided with an inking unit, provided with a printing cylinder for each specific color.

Also in case of use of a flexographic machine, then, the final result will be the outcome of the sequence or overlapping of different colors. In case of overlapping of colors - as was said before - the value of total coverage of the colors on the printed area can be higher than 100%.

As we said, for example in the area Z of figure 2 two printed areas 13 can be provided that are obtained with colors having different or equal percentages of coverage, and in the central area Z1 of color overlapping, the total coverage can be higher than 100%, if each of said colors has a coverage that is higher than 50%.

The layer 22, or the printing support, can be made in a material such as nylon or the like.

The layer 23 is an intermediate sealing layer and can be made for instance of cast polyethylene or the like.

The layer 24 is an inner sealing layer, in direct contact with the product, and can be made for example of extruded heat-sealable polyethylene or the like.

The total thickness of the film 10 can be comprised for example between about 70 µm and about 80 µm. The structure of the film 10 illustrated in figure 6 guarantees a great resistance and at the same time lightness of the package obtained, beside a valuable aesthetic aspect.

It is evident that modifications and/or additions of parts can be made to the present method for manufacturing a package for dairy products and to the package for dairy products thus manufactured described heretofore, without, for this, departing from the scope of the present invention.

It is also evident that, even though the present invention was described with reference to some specific examples, a person of skill in the art will be readily able to achieve other equivalent forms of the method for manufacturing a package for dairy products and of the package for dairy products thus manufactured having the features set out in the claims and, hence, all of them falling within the scope of protection defined by the claims.

In the claims that follow, the aim of the reference numbers in parentheses is only that of facilitating reading and they must not be considered as limiting factors as regards the field of protection underlying the specific claims.

## Claims

1. Method for manufacturing a package (20) for dairy products, in particular for dairy products with preserving liquid, wherein the method comprises:
printing a multi-layer film (10) provided with at least one outer layer (22), at least one central area (11) configured to receive areas or graphic elements according to any coverage or covering index whatsoever of the color or colors, at least two transverse edges (12, 12') and two longitudinal edges (15, 16), wherein on at least one of said transverse edges (12, 12') and/or said longitudinal edges (15, 16) printed areas (13, 17, 19) are achieved with one or more colors having a total coverage or total covering index of the color or colors comprised between 10% and 150% and the ratio between printed areas (13, 17, 19) and colorless areas or areas without ink (14, 18, 21) in said longitudinal edges (15, 16) and/or in said transverse edges (12, 12') is comprised between 10% and 60%, wherein said printing areas (13, 17, 19) are achieved on the inner surface of said outer layer (22) and wherein the total coverage or total covering index is the surface or area that is printed by one or more printing cylinders by rotogravure or flexographic technique; and sealing said longitudinal edges (15, 16) and said transverse edges (12, 12') in a manner such as to obtain a package (20) for dairy products in which said longitudinal edges (15, 16) and said transverse edges (12, 12') have a strength preferably of at least 5N/15mm.

2. Method as in claim 1, **characterized in that** said value of total coverage or total covering index is equal to or lower than about 50%.

3. Method as in claim 1, **characterized in that** the distribution of printed areas and colorless areas or areas without ink obtained in a specific area (Z) of said transverse edges (12, 12') and/or of said longitudinal edges (15, 16) is such as to comply with said total coverage or total covering index comprised between 10% and 150% and/or said ratio between printed areas (13, 17, 19) and colorless areas or areas without ink (14, 18, 21) comprised between 10% and 60%.

4. Method as in any claim hereinbefore, **characterized in that** through said step of printing at least one of the longitudinal edges (15, 16) and/or of the transverse edges (12, 12') an alternation between printed areas (13, 17, 19) and colorless areas or areas without ink (14, 18, 21) is obtained which is suitable to allow for a correct production of packages on the production lines.

5. Method as in any claim hereinbefore, **characterized in that** said printing of the film (10) is followed by a step of folding the film (10) in a manner such as to give it a substantially tubular shape, by the sealing of the longitudinal edges (15, 16) and by the sealing of the transverse edges (12, 12').

6. Package for dairy products, in particular for dairy products with preserving liquid, obtained by a manufacturing method as in any claim hereinbefore.

7. Package as in claim 6, **characterized in that** it comprises the film (10) which is provided with at least one outer layer (22), the inner surface of which acts as a support for said printed areas (13, 17, 19), with at least one intermediate sealing layer (23) and with at least one inner sealing layer (24).

8. Package as in claim 7, **characterized in that** said film (10) has a thickness comprised between about 70 µm and about 80 µm.

## Patentansprüche

1. Verfahren zum Herstellen einer Verpackung (20) für Molkereiprodukte, insbesondere für Molkereiprodukte mit Konservierungsflüssigkeit, wobei das Verfahren umfasst:
Bedrucken einer mehrschichtigen Folie (10), die ausgebildet ist mit mindestens einer äußeren Schicht (22), mindestens einem zentralen Bereich (11), der eingerichtet ist, um Flächen oder graphische Elemente gemäß einer Abdeckung oder einem Abdeckungsgrad durch eine oder mehrere Farben zu erhalten, mindestens zwei querverlaufenden Rändern (12, 12') und zwei längsverlaufenden Rändern (15, 16), wobei auf mindestens einem der querverlaufenden Ränder (12, 12') und/oder der längsverlaufenden Ränder (15, 16) bedruckte Bereiche (13, 17, 19) mit einer oder mehreren Farben, die eine Gesamtabdeckung oder einen Gesamtabdeckungsgrad durch die eine oder die mehreren Farben zwischen 10% und 150% aufweisen, geschaffen werden, wobei ein Verhältnis zwischen den bedruckten Bereichen (13, 17, 19) und farblosen Bereichen oder Bereichen ohne Druckfarbe (14, 18, 21) in den längsverlaufenden Rändern (15, 16) und/oder in den querverlaufenden Rändern (12, 12') zwischen 10% und 60% umfasst, wobei die bedruckten Bereiche (13, 17, 19) auf einer inneren Oberfläche der äußeren Schicht (22) gebildet werden und wobei die Gesamtabdeckung oder der Gesamtabdeckungsgrad eine Oberfläche oder eine Fläche darstellt, die von einem oder mehreren Druckzylindern durch Rotationstiefdruck oder Flexodruckverfahren bedruckt wird; und
Versiegeln der längsverlaufenden Ränder (15, 16) und der querverlaufenden Ränder (12, 12') auf eine Weise, um die Verpackung (20) für Molkereiprodukte zu erhalten, wobei die längsverlaufenden Ränder (15, 16) und die querverlaufenden Ränder (12, 12') eine Festigkeit von vorzugsweise mindestens 5N/15mm aufweisen.

2. Verfahren nach Anspruch 1, **dadurch gekennzeichnet, dass** ein Wert der Gesamtabdeckung oder des Gesamtabdeckungsgrads gleich oder niedriger ist als etwa 50%.

3. Verfahren nach Anspruch 1, **dadurch gekennzeichnet, dass** eine Verteilung der bedruckten Bereiche und der farblosen Bereiche oder der Bereiche ohne Druckfarbe, die in einem bestimmten Bereich (Z) der querverlaufenden Ränder (12, 12') und/oder der längsverlaufenden Ränder (15, 16) gebildet werden, dergestalt ist, dass die Gesamtabdeckung oder der Gesamtabdeckungsgrad zwischen 10% und 150% und/oder das Verhältnis zwischen den bedruckten Bereichen (13, 17, 19) und den farbfreien Bereichen oder den Bereichen ohne Druckfarbe (14, 18, 21) zwischen 10% und 60% umfasst.

4. Verfahren nach einem der vorangehenden Ansprüche, **dadurch gekennzeichnet, dass** durch einen Schritt des Bedruckens mindestens eines der längsverlaufenden Ränder (15, 16) und/oder der querverlaufenden Ränder (12, 12') ein Alternieren zwischen bedruckten Bereichen (13, 17, 19) und farblosen Bereichen oder Bereichen ohne Druckfarbe (14, 18, 21) erreicht wird, wodurch eine korrekte Herstellung der Verpackungen auf den Produktionsbändern ermöglicht wird.

5. Verfahren nach einem der vorangehenden Ansprüche, **dadurch gekennzeichnet, dass** auf das Bedrucken der Folie (10) ein Schritt eines Faltens der Folie (10) folgt, um ihr eine schlauchförmige Form zu geben, gefolgt durch das Versiegeln der längsverlaufenden Ränder (15, 16) und der querverlaufenden Ränder (12, 12').

6. Verpackung für Molkereiprodukte, insbesondere für Molkereiprodukte mit Konservierungsflüssigkeit, erhalten durch das Verfahren nach einem der vorangehenden Ansprüchen.

7. Verpackung nach Anspruch 6, **gekennzeichnet durch**, dass sie die Folie (10) umfasst, die mit der mindestens einen äußeren Schicht (22), deren innere Oberfläche als ein Träger für die bedruckten Bereiche (13, 17, 19) dient, mit mindestens einer Zwischenversiegelungsschicht (23) und mit mindestens einer inneren Versiegelungsschicht (24) ausgebildet ist.

8. Verpackung nach Anspruch 7, **gekennzeichnet durch**, dass die Folie (10) eine Dicke zwischen etwa 70 µm und etwa 80 µm umfasst.

## Revendications

1. Procédé de fabrication d'un emballage (20) pour les produits laitiers, en particulier pour les produits laitiers avec liquide de conservation, le procédé comprenant :
le fait d'imprimer un film (10) à plusieurs couches pourvu d'au moins une couche externe (22), d'au moins une zone centrale (11) configurée pour recevoir des surfaces ou des éléments graphiques selon toute couverture ou indice de couverture de la couleur ou des couleurs, d'au moins deux bords transversaux (12, 12') et de deux bords longitudinaux (15, 16) ; sur au moins un desdits bords transversaux (12, 12') et / ou desdits bords longitudinaux (15, 16), des zones imprimées (13, 17, 19) sont réalisées avec une ou plusieurs couleurs ayant une couverture totale ou un indice de couverture totale de la couleur ou des couleurs compris entre 10% et 150%, et le rapport entre les zones imprimées (13, 17, 19) et les zones incolores ou les zones sans encre (14, 18, 21) dans lesdits bords longitudinaux (15, 16) et / ou dans lesdits bords transversaux (12, 12') est compris entre 10% et 60%, lesdites zones d'impression (13, 17, 19) étant réalisées sur la surface intérieure de ladite couche externe (22), et la couverture totale ou l'indice de couverture totale étant la surface ou la zone qui est imprimée par un ou plusieurs cycles d'impression par rotogravure ou technique flexographique ; et le fait de relier de manière étanche lesdits bords longitudinaux (15, 16) et lesdits bords transversaux (12, 12') d'une manière à obtenir un emballage (20) pour des produits laitiers dans lesquels lesdits bords longitudinaux (15, 16) et lesdits bords transversaux (12, 12') ont une résistance de préférence d'au moins 5N/15 mm.

2. Procédé selon la revendication 1, caractérisé en que ladite valeur de couverture totale ou d'indice de couverture totale est égale ou inférieure à environ 50%.

3. Procédé selon la revendication 1, **caractérisé en ce que** la distribution de zones imprimées et de zones incolores ou de zones sans encre obtenues dans une zone spécifique (Z) desdits bords transversaux (12, 12') et / ou desdits bords longitudinaux (15, 16) est telle qu'elle corresponde au fait que ladite couverture totale ou indice de couverture totale soit compris entre 10% et 150% et / ou que ledit rapport entre des zones imprimées (13, 17, 19) et des zones incolores ou des zones sans encre (14, 18, 21) soit compris entre 10% et 60%.

4. Procédé selon l'une quelconque des revendications précédentes, **caractérisé en ce que** par cette étape d'impression d'au moins un parmi les bords longitudinaux (15, 16) et / ou les bords transversaux (12, 12'), une alternance entre des zones imprimées (13, 17, 19) et des zones incolores ou des zones sans encre (14, 18, 21) est obtenue, qui convient pour permettre une production correcte d'emballages sur les lignes de production.

5. Procédé selon l'une quelconque des revendications précédentes, **caractérisé en ce que** ladite impression du film (10) est suivie par une étape de pliage du film (10) d'une manière lui donnant une forme substantiellement tubulaire, par la liaison étanche des bords longitudinaux (15, 16) et par la liaison étanche des bords transversaux (12, 12').

6. Emballage pour les produits laitiers, en particulier pour des produits laitiers avec un liquide de conservation, obtenu par un procédé de fabrication selon l'une quelconque des revendications précédentes.

7. Emballage selon la revendication 6, **caractérisé en ce qu'**il comprend le film (10) qui est pourvu d'au moins une couche extérieure (22), dont la surface intérieure agit comme un support pour lesdites zones imprimées (13, 17, 19), avec au moins une couche de scellage intermédiaire (23) et avec au moins une couche de scellage intérieure (24).

8. Emballage selon la revendication 7, caractérisé dans ce que ledit film (10) a une épaisseur comprise entre environ 70 µm et environ 80 µm.
